# NEUE EUROPÄISCHE PATENTSCHRIFT

(11) **EP 3 394 466 B2**
(45) Veröffentlichungstag und Bekanntmachung des Hinweises auf die Entscheidung über den Einspruch: **29.07.2026**
(45) Hinweis auf die Patenterteilung: 20.09.2023
(21) Anmeldenummer: 16831890.5
(22) Anmeldetag: 19.12.2016
(51) Int. Cl.: F16D 55/2255, F16D 65/097

(54) **SCHEIBENBREMSE, BREMSBELAG FÜR EINE SCHEIBENBREMSE, NIEDERHALTER FÜR DIE BEFESTIGUNG VON BREMSBELÄGEN**
DISC BRAKE, BRAKE PAD FOR A DISC BRAKE, AND HOLD-DOWN DEVICE FOR SECURING BRAKE PADS
GARNITURE DE FREIN À DISQUE ET DISPOSITIF DE RETENUE POUR LA FIXATION DE GARNITURES DE FREIN

(30) Priorität: 22.12.2015 DE 102015122569
(43) Veröffentlichungstag der Anmeldung: 31.10.2018
(73) Patentinhaber: BPW Bergische Achsen KG, 51674 Wiehl (DE)
(72) Erfinder: SCHWARZ, Michael, 51469 Bergisch Gladbach (DE); NEUMANN, Arthur, 51597 Morsbach (DE)
(74) Vertreter: DREISS Patentanwälte PartG mbB
(86) Internationale Anmeldenummer: PCT/DE2016/100599
(87) Internationale Veröffentlichungsnummer: WO 2017/108029

(56) Entgegenhaltungen:
- EP-A1- 1 898 114
- WO-A1-2007/051614
- WO-A2-2009/013007
- DE-A1- 102014 107 227
- DE-A1- 102015 000 857
- DE-A1- 2 728 131
- DE-B3- 102005 052 436
- DE-U1- 202008 013 446
- US-A- 4 121 699
- US-A1- 2005 284 710
- US-B2- 7 631 733

## Beschreibung

Die Erfindung betrifft eine Scheibenbremse nach dem Oberbegriff des unabhängigen Patentanspruchs 1. Diese Scheibenbremse weist einen Bremssattel auf, der eine Bremsscheibe und zu deren beiden Seiten in einem Belagschacht angeordnete Bremsbeläge übergreift, die sich jeweils aus einem Reibbelag und einer Rückenplatte zusammensetzen, deren Vorderseite als Befestigungsfläche für den Reibbelag ausgebildet ist und deren Rückseite als Druckfläche zur Übertragung des Bremsdrucks ausgebildet ist. Quer über die Bremsbeläge führt ein Niederhalter, der zu der Scheibenbremsachse hin gegen die Bremsbeläge abgestützt ist. Der Niederhalter ist auf einem großen Teil seiner Gesamtlänge als eine Rinne ausgebildet. Diese besteht aus einer langgestreckten Basis, gegen die eine Feder abgestützt ist, wobei an den Seiten der Basis angeordnete Seitenflanken den Niederhalter verstärken.

Die Erfindung betrifft ferner einen Bremsbelag für eine Scheibenbremse nach dem Oberbegriff des unabhängigen Patentanspruchs 12. Dieser Bremsbelag setzt sich zusammen aus einem zur Anlage gegen die Bremsscheibe der Scheibenbremse bestimmten Reibbelag und einer Rückenplatte, deren Vorderseite als Befestigungsfläche für den Reibbelag ausgebildet ist, deren Rückseite als Druckfläche zur Übertragung des Bremsdrucks ausgebildet ist, und deren Umfangskontur bestimmt ist durch einen oberen Rand, einen unteren Rand und zwei sich zwischen dem oberen und dem unteren Rand erstreckende Seitenränder.

Die Erfindung betrifft ferner einen Niederhalter für die Befestigung von Bremsbelägen in einer Scheibenbremse nach dem Oberbegriff des unabhängigen Patentanspruchs 18. Der Niederhalter, welcher eine im Vergleich zu seiner Länge wesentlich geringere Breite aufweist, ist auf einem großen Teil seiner Gesamtlänge als eine Rinne aus einer langgestreckten Basis und an den Seiten der Basis angeordneten Seitenflanken ausgebildet. Auf einem anderen Teil seiner Gesamtlänge weist er einen Endbereich mit abweichender Querschnittsgestalt auf.

Aus der EP 1 898 115 B1 ist bereits eine Fahrzeug-Scheibenbremse mit zu beiden Seiten einer Bremsscheibe angeordneten Bremsbelägen bekannt, bei der sich ein Niederhalter in Gestalt eines starren Bügels über den Belagschacht des Bremssattels und zugleich quer über die darin angeordneten Bremsbeläge erstreckt. Der Niederhalter ist zu der Scheibenbremsachse hin gegen die Bremsbeläge abgestützt, wobei diese Abstützung unter Federkraft erfolgt. Hierzu erstreckt sich außen, längs des Niederhalters, eine mit ihren Enden gegenüber dem Bremssattel festgelegte Blattfeder. Sie beaufschlagt den Niederhalter mit einer Niederhaltekraft zu der Scheibenbremsachse hin, wodurch die Bremsbeläge in ihren jeweiligen Aufnahmen in dem Bremssattel oder in einem Bremsträger gehalten werden.

Aus der DE 10 2005 052436 B3 und der EP 1 898 114 A1 sind jeweils eine Scheibenbremse und ein Bremsbelag bekannt. Aus der DE 27 28 131 A1 sind eine Scheibenbremse und ein Bremsbelag bekannt, wobei an der Rückenplatte des Bremsbelags als Gegenlager dienende, abstehende Flansche vorgesehen sind.

Für eine platzsparende Anordnung werden Scheibenbremsen zumeist möglichst weit fahrzeugaußen angeordnet, wobei sich Teile der Scheibenbremse bereits innerhalb des gebremsten Fahrzeugrades befinden. Zugleich ist angestrebt, zur Erzielung einer hohen Bremsleistung die Bremsscheibe der Scheibenbremse möglichst groß zu dimensionieren.

Dieses Bestreben hat allerdings zur Folge, dass zwischen den Bauteilen der Scheibenbremse und dem um die Bremse rotierenden Fahrzeugrad nur wenig Freiraum verbleibt. Nicht ungewöhnlich ist daher, dass es beim Auftreten zusätzlicher Biegebelastungen zu einem Schleifen radial weit außen liegender Bremsenteile an der rotierenden Innenfläche des Fahrzeugrades kommt.

Die **Aufgabe** der Erfindung ist es, einen Lösungsbeitrag zu dem Problem der baulichen Enge zwischen den Bauteilen der Scheibenbremse und dem um die Bremse rotierenden Fahrzeugrad zu leisten.

Einen solchen Lösungsbeitrag leistet eine Scheibenbremse mit den Merkmalen des Patentanspruchs 1.

Bei einer solchen Scheibenbremse weist der Niederhalter zu seinem einen Ende hin eine sich an die Basis anschließende S-förmige Kröpfung und einen sich an die Kröpfung anschließenden Endabschnitt, wobei an dem Endabschnitt eine ein- oder zweiteilige Auflagefläche ausgebildet ist, mit der sich der Niederhalter gegen einen der Bremsbeläge auf der Rückseite von dessen Rückenplatte abstützt. Durch diese Gestaltung des Niederhalters in seinem einen Endbereich nimmt der Niederhalter auf diesem Teil seiner Länge eine Position weniger weit radial außen ein, wodurch sich die durch die bauliche Enge zwischen den Bauteilen der Scheibenbremse und dem um die Bremse rotierenden Fahrzeugrad hervorgerufene Gefahr reduziert, dass es zu einem Schleifen von Bremsenteilen innen an dem Fahrzeugrad kommt.

Einen Lösungsbeitrag zu der genannten Aufgabe leistet ferner ein Bremsbelag für eine Scheibenbremse mit den Merkmalen des Patentanspruchs 12. Bei diesem Bremsbelag ist an der Rückseite der Rückenplatte ein ein- oder zweiteiliger Ansatz angeformt, der zwecks Abstützung in einer Belagaufnahme mit einer dem unteren Rand der Rückenplatte zugewandten Stützfläche versehen ist.

Einen Lösungsbeitrag zu der genannten Aufgabe leistet ferner ein Niederhalter mit den Merkmalen des Patentanspruchs 18. Dieser weist in seinem einen Endbereich eine sich an die Basis anschließende S-fömige Kröpfung und einen sich an die Kröpfung anschließenden Endabschnitt auf, wobei an dem Endabschnitt eine ein- oder zweiteilige Auflagefläche ausgebildet ist.

Vorteilhafte Ausgestaltungen der Scheibenbremse, des Bremsbelags und des Niederhalters sind in den jeweiligen Unteransprüchen angegeben. Auch diese Ausgestaltungen leisten einen Lösungsbeitrag zu dem Problem der baulichen Enge zwischen den Bremsenteilen der Scheibenbremse und dem um die Bremse rotierenden Fahrzeugrad.

Ausführungsbeispiele werden im Folgenden anhand der Zeichnungen näher erläutert. Darin zeigen:
- Fig. 1: eine perspektivische Darstellung des Bremssattels einer Fahrzeug-Scheibenbremse einschließlich des im Bremssattel ausgebildeten Belagschachts mit einem darin angeordneten Bremsbelag, sowie einer Niederhalteranordnung über dem Belagschacht;
- Fig. 2: die Gegenstände nach Fig. 1 in einer anderen perspektivischen Darstellung, jedoch ohne alle Teile der in Fig. 1 komplett wiedergegebenen Niederhalteranordnung;
- Fig. 3a: die Gegenstände nach Fig. 1 in einem mittig angelegten Längsschnitt durch den Sattel;
- Fig. 3b: die Gegenstände nach Fig. 1 in einem anderen, hier nicht mittig angelegten Längsschnitt durch den Sattel;
- Fig. 3c: den linken Bereich der Fig. 3a in größerem Maßstab; Fig. 4a den linken Bereich der Fig. 2 in größerem Maßstab;
- Fig. 4b: denselben Bereich wie Fig. 4a, allerdings bei fehlendem Bremsbelag;
- Fig. 5: eine perspektivische Darstellung nur des Bremsbelags mit dem Betrachter zugewandter Rückenplatte;
- Fig. 6: eine perspektivische Darstellung nur des an dem Bremssattel verwendeten Niederhalters der Niederhalteranordnung;
- Fig. 7: den Niederhalter in einer Seitenansicht;
- Fig. 8: eine perspektivische Darstellung nur des an dem Bremssattel verwendeten Bügels, welcher zugleich als Widerlagerelement und als Sperrelement dient;
- Fig. 9a - 9c: drei verschiedene Varianten des Bügels und deren Zusammenwirken mit dem Bremsbelag;
- Fig. 10: in vier verschiedenen Schritten das Befestigen der Blattfeder, und
- Fig. 11: eine andere Ausführungsform des Niederhalters und des Bremsbelags.

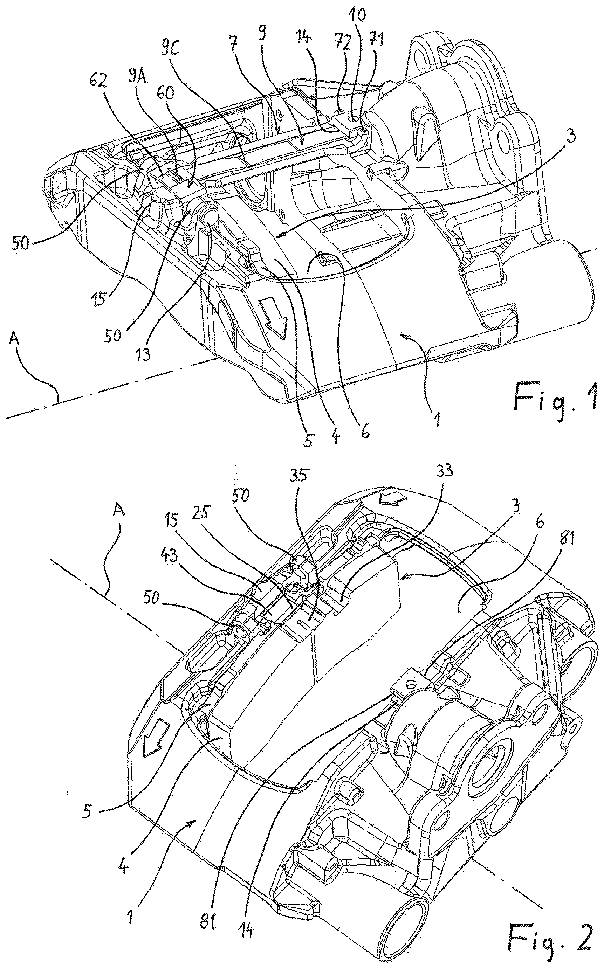

Die Figuren 1 - 3 zeigen den zentralen Teil des Bremssattels 1 einer Fahrzeug-Scheibenbremse für Nutzfahrzeuge. Die Scheibenbremse kann vom Gleitsattel-Bautyp oder vom Festsattel-Bautyp sein. Zu jeder Seite der nur anhand ihrer Drehachse A wiedergegebenen Bremsscheibe ist jeweils ein Bremsbelag angeordnet. Zur Aufnahme der Bremsbeläge ist der Bremssattel 1 mit einem Belagschacht 6 versehen, über den sich ein Belagniederhalter 7 erstreckt. Der Belagniederhalter 7 überbrückt den Belagschacht 6 in der Weise, dass sich der Belagniederhalter 7 quer über beide Bremsbeläge erstreckt, wobei in den Figuren nur der fahrzeugaußen angeordnete Bremsbelag 3 dargestellt ist und nicht der fahrzeuginnen angeordnete, zweite Bremsbelag, welcher identisch oder unterschiedlich gestaltet sein kann.

Der Bremsbelag 3 besteht wie üblich aus dem eigentlichen Reibbelag 4 sowie einer Rückenplatte 5. Die Rückenplatte 5 besteht vorzugsweise aus Gussmetall. Die Rückenplatte 5 dient der besseren Verteilung des Bremsdrucks über die Belagfläche. Außerdem übernimmt sie die Führung und die Abstützung des Bremsbelags entweder an dem Bremssattel 1 selbst, oder an einem achsfesten Bremsträger.

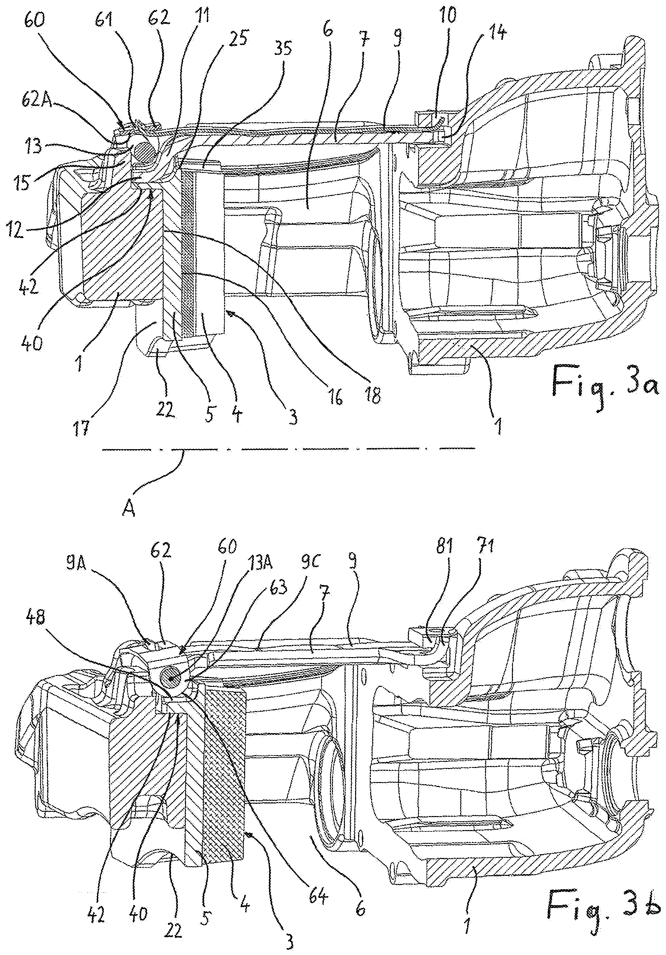

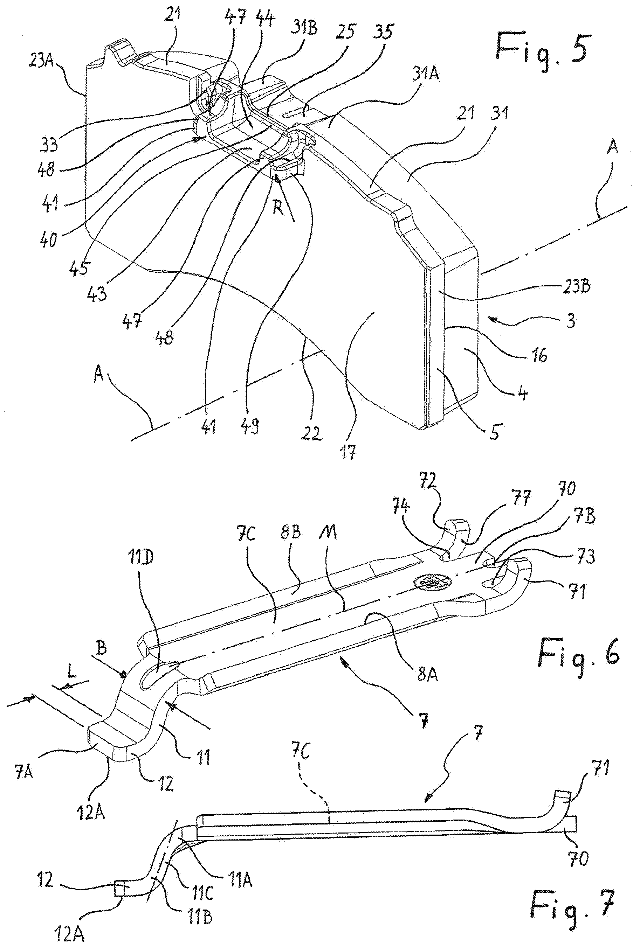

Der in Fign. 6 und 7 als Einzelteil wiedergegebene Belagniederhalter 7 ist längs seiner Mittellinie M länglich gestaltet und erstreckt sich mit dem größten Teil seiner Länge parallel zu der Drehachse Ader Bremsscheibe. Sein rechts wiedergegebenes, fahrzeuginneres Ende ist unmittelbar an dem Bremssattel 1 befestigt, wozu dieses Ende des Niederhalters 7 in einer Ausnehmung 14 (Fig. 3a) des Bremssattels 1 sitzt. Das andere, links wiedergegebene Ende des Niederhalters 7 ist nur mittelbar an dem Bremssattel 1 befestigt, was noch näher erläutert werden wird.

Zur Sicherung der beiden Bremsbeläge in dem Belagschacht 6 ist der Niederhalter 7 als ein starrer Haltebügel ausgebildet, und mit einer biegeelastischen Blattfeder 9 zu einer Niederhalteranordnung kombiniert. Aufgabe der Niederhalteranordnung ist es, beide Bremsbeläge so gegenüber dem Belagschacht 6 zu fixieren, dass die Bremsbeläge nicht nach radial außen, bezogen auf die Drehachse A der Bremsscheibe, aus dem Belagschacht 6 heraustreten oder herausfallen können.

Der Niederhalter 7 ist auf dem überwiegenden Teil seiner Gesamtlänge von rinnenförmigem Querschnitt mit einer auf der Längsmittellinie M des Niederhalters angeordneten Basis 7C, an die sich längs beider Längsränder der Basis Seitenflanken 8A, 8B anschließen, die diesen zentralen Längsabschnitt des Niederhalters gegenüber Biegekräften verstärken.

Mit den Seitenflanken 8A, 8B kann sich der Niederhalter auf dem Rand des innenliegenden, auf der Zeichnung nicht dargestellten Bremsbelags abstützen. Hierzu kann es von Vorteil sein, wenn die Flanken 8A, 8B die Gestalt ansteigender Schrägen aufweisen. In diesem Fall weist der Niederhalter 7 auf diesem größten Teil seiner Länge einen in etwa trapezförmigen Querschnitt auf, und er weist in diesem Fall insbesondere den Querschnitt einer trapezförmigen Rinne auf.

An den durch die Basis 7C gebildeten, flachen Boden der Rinne, welcher in etwa die Breite der Blattfeder 9 aufweist, schließen sich zu beiden Seiten die Seitenflanken 8A, 8B in einem Winkel zwischen 15° und 90° an, vorzugsweise in einem Winkel von 20°. Die aus einem Federstahl bestehende Blattfeder 9 erstreckt sich ebenfalls auf der Längsmittellinie M. Sie ist mit ihrem einen Federende in einem ersten Federlager, und mit ihrem anderen Federende in einem zweiten Federwiderlager befestigt. Beide Befestigungen sind lösbar, um die Feder 9 und den darunter angeordneten Belagniederhalter 7 zu entfernen, und so zum Austausch der Bremsbeläge von außen her an den Belagschacht 6 zu gelangen. Die Blattfeder 9 erstreckt sich auf der Außenseite des Niederhalters 7 längs zu diesem, und sie ist von außen her gegen den Niederhalter 7 abgestützt, wodurch dieser zu beiden Bremsbelägen hin federbelastet ist. Daher stützt sich der Niederhalter 7, obwohl selbst starr, unter dauernder Federkraft gegen beide Bremsbeläge ab und beaufschlagt diese jeweils mit einer zu der Drehachse A hin gerichteten Kraft.

Die Blattfeder 9 stützt sich nur mit einem sehr kurzen Längsabschnitt außen an dem Belagniederhalter 7 ab. Auf diesem kurzen Längsabschnitt, der sich auf einem Mittelabschnitt der Blattfeder 9 und über dem Belagschacht 6 befindet, ist die Blattfeder mit einer Biegung bzw. einem Knick 9C versehen, der sich quer zur Längserstreckung der Blattfeder 9 erstreckt. Nur mit der Außenseite dieser Biegung bzw. dieses Knicks 9C liegt die Blattfeder 9 an dem Niederhalter 7 an. Nur am Ort dieser diskreten Anlage wird daher der Niederhalter 7 mit der Federkraft in Richtung auf die Bremsbeläge 3 beaufschlagt.

Ein erstes Federwiderlager für die Blattfeder 9 befindet sich fahrzeugaußen neben dem Belagschacht 6, ein zweites Federwiderlager fahrzeuginnen am Bremssattel 1. Das fahrzeugäußere Federwiderlager weist für die Festlegung des betreffenden Endes 9A der Blattfeder 9 einen Bolzen 13 auf. Hingegen ist der Bremssattel 1 zur Bildung des zweiten Federwiderlagers mit der zu dem Belagschacht 6 hin offenen Ausnehmung 14 in Gestalt eines Schlitzes versehen. Dieser Schlitz bietet Platz zugleich für das dortige Ende des Niederhalters 7 wie auch für das dortige Ende der Blattfeder 9.

Für die Montage der Anordnung aus Niederhalter 7 und Blattfeder 9 kann es von Vorteil sein, wenn die gemeinsam in die schlitzförmige Ausnehmung 14 des Bremssattels 1 eingesetzten Enden dieser beiden Bauteile in Längsrichtung zueinander verriegelt sind. Hierzu ist der Niederhalter 7 an diesem Ende mit einer Stirnfläche versehen, in der sich eine Ausnehmung 7B befinden kann (Fig. 6). In die Ausnehmung 7B greift dann ein an dem entsprechenden Ende der Blattfeder 9 ausgebildetes Formschlusselement ein. Diese Art der Längsverriegelung der Blattfeder 9 hat zur Folge dass, sobald sich der Niederhalter 7 in der Öffnung bzw. Ausnehmung 14 des Bremssattels 1 befindet, die Blattfeder 9 in Längsrichtung verriegelt, nämlich axial an dem Niederhalter 7 gefangen ist. Diese Maßnahme dient der Sicherheit und erleichtert das anschließende Festlegen des Niederhalters 7 und vor allem der Blattfeder 9 an dem anderen Ende, also im Bereich des links wiedergegebenen, fahrzeugaußen gelegenen Federwiderlagers.

Alternativ ist eine sichere vorläufige Längsverriegelung der Blattfeder 9 auch erreichbar, indem diese mit einem an dem fahrzeuginneren Ende der Blattfeder 9 ausgebildeten Formschlusselement in eine Öffnung 10 eingreift, die sich unmittelbar in dem Bremssattel 1 befindet. Die Öffnung 10 ist hier eine quer zu dem Schlitz 14 im Bremssattel ausgebildete Bohrung. Um seitens des Niederhalters 7 einen Beitrag zu leisten, die bauliche Enge zwischen dem rotierenden Fahrzeugrad und den nichtrotierenden Bremsenteilen zu mindern, ist der Niederhalter an seinem fahrzeugaußen gelegenen Ende in besonderer Weise gestaltet, was im Folgenden näher erläutert wird. Gemäß den Fign. 6 und 7 ist der Niederhalter 7 auf seinem fahrzeugaußen gelegenen Endabschnitt mit einer Breite B schmaler gestaltet, als auf dem vergleichsweise längeren, die Gestalt einer Rinne aufweisenden Längsabschnitt. Die Breite B ist auf diesem Endabschnitt einheitlich und ist nicht größer als die Breite der Basis 7C. Vor allem ist der Niederhalter 7 auf diesem kürzeren Längsabschnitt mit einer an die gestreckt verlaufende Basis 7C anschließenden Kröpfung 11 versehen, indem der Niederhalter 7, ausgehend von der Basis 7C, zunächst eine erste Biegung 11A nach unten, und daran anschließend eine zweite Biegung 11B als Gegenbiegung aufweist. An die zweite Biegung 11B schließt sich, als fahrzeugäußeres Ende des Niederhalters 7, unmittelbar ein gerader Längsabschnitt 12 an. Der gerade Längsabschnitt 12 liegt auf diese Weise tiefer bzw. näher an der Drehachse A, als die Basis 7C des rinnenförmigen Längsabschnitts.

Vorzugsweise ist die S-förmige Kröpfung 11 so ausgestaltet, dass deren zweite Biegung 11B, welche unmittelbar in den geraden Endabschnitt 12 übergeht, nicht unmittelbar an die erste Biegung 11A anschließt, sondern sich dazwischen noch ein kurzer, gerade verlaufender Abschnitt 11C befindet. Dessen Winkel zu dem rinnenförmigen Längsabschnitt beträgt 110°.

Der Längsabschnitt 12 erstreckt sich auf einer Länge L im Wesentlichen parallel zu der Drehachse A und parallel versetzt zu dem deutlich längeren, rinnenförmigen Längsabschnitt. Bei dem Ausführungsbeispiel, bei dem der Niederhalter 7 eine Gesamtlänge von etwa 150 mm aufweist, verläuft der Endabschnitt 12 um 15 bis 20 mm versetzt zu der Basis 7C des rinnenförmigen Abschnitts Der Bereich der Kröpfung 11 kann durch eine oder mehrere Versteifungssicken 11 D verstärkt sein, da der Niederhalter 7 hier mit der Breite B relativ schlank ist, und Biegekräfte auftreten können. Vorzugsweise besteht der Niederhalter 7 aus gestanztem und verformtem Stahlblech mit einer Materialdicke von mindestens 4 mm.

Bei montiertem Bolzen 13 wird dieser von der Kröpfung 11 oder dem das Ende des Niederhalters 7 bildenden Längsabschnitt 12 ohne Berührungskontakt untergriffen. Trotzdem ist dieser Endbereich des Niederhalters durch den oberhalb angeordneten Bolzen 13 so gefangen, dass er sich unter keinen Umständen nach außen von dem Bremsschacht 6 lösen kann. Die Kröpfung 11 bzw. der Endabschnitt 12 des Niederhalters 7 weisen im montierten Zustand einen solchen Höhenabstand zu dem Bolzen 13 auf, dass es zu keinem Kontakt kommt.

Der Niederhalter 7 liegt von oben her auf den Rückenplatten 5 beider Bremsbeläge auf und ist dort zunächst nur in seiner Längsrichtung beweglich, hingegen quer dazu mittels seitlicher Formelemente der Bremsbeläge fixiert gehalten. Beide Bremsbeläge sind im Belagschacht 6 in Richtung der Drehachse der Bremsscheibe A frei beweglich und in Umfangsrichtung der Bremsscheibe mit einem gewissen Spiel geführt. Diese Kombination von Bewegungsfreiheiten führt dazu, dass der Niederhalter 7 an den Bremsbelägen 3 in seiner Längserstreckung frei und quer mit den Bremsbelägen 3 beschränkt beweglich bzw. schwimmend gelagert ist. Die Bewegung in seiner Längserstreckung wird in montiertem Zustand durch jeweilige Anschläge am Bremssattel 1 eng begrenzt. Hierzu sind die Anschlagflächen, zwischen denen sich der Niederhalter 7 bewegen kann, z. B. durch Fräsen des Bremssattels 1 mechanisch bearbeitet.

In Längsrichtung des Niederhalters 7 steht dessen Endabschnitt 12 ein an dem Bremssattel 1 angeformter Vorsprung 15 mit geringem Abstand gegenüber. Der Vorsprung 15 bildet daher einen Anschlag, welcher die Längsbeweglichkeit des Niederhalters 7 nach fahrzeugaußen hin begrenzt.

Vorzugsweise erstreckt sich der Vorsprung 15 bis nahe an den Umfang des Bolzens 13, allerdings ohne den Bolzen 13 zu berühren.

Zwei einstückig an dem Bremssattel 1 angeformte Lagerböcke 50 weisen je eine Bohrung auf, in der der Bolzen 13 auf der Achse 13A sitzt. Damit sich der Bozen 13 nicht in Bolzenlängsrichtung aus den Lagerböcken 50 und damit aus dem Sattel lösen kann, sind an dem Bolzen 13 geeignete Sicherungsringe, Splinte oder dergleichen vorgesehen. Die Fign. 3a - 3c und hier insbesondere Fig. 3b zeigen Einzelheiten der Festlegung des fahrzeugäußeren Endes 9A der Blattfeder 9 an dem Widerlager. Bestandteil dieses Federwiderlagers ist außer dem Bolzen 13 ein Befestigungsbügel 60, der mittels des Bolzens 13 um die Bolzenachse 13A schwenkbeweglich mit dem Bremssattel 1 verbunden ist. Gegen die der Achse 13A zugewandte Innenseite bzw. Unterseite des Bügels 60 stützt sich die Blattfeder 9 mit ihrem Federende 9A ab. Von zusätzlichem Vorteil kann es sein, wenn ein an diesem Federende 9A ausgebildetes Formschlusselement in eine schlitzförmige Öffnung 61 in dem Bügel 60 eingreift, und dadurch die Schwenkposition des Bügels 60 arretiert.

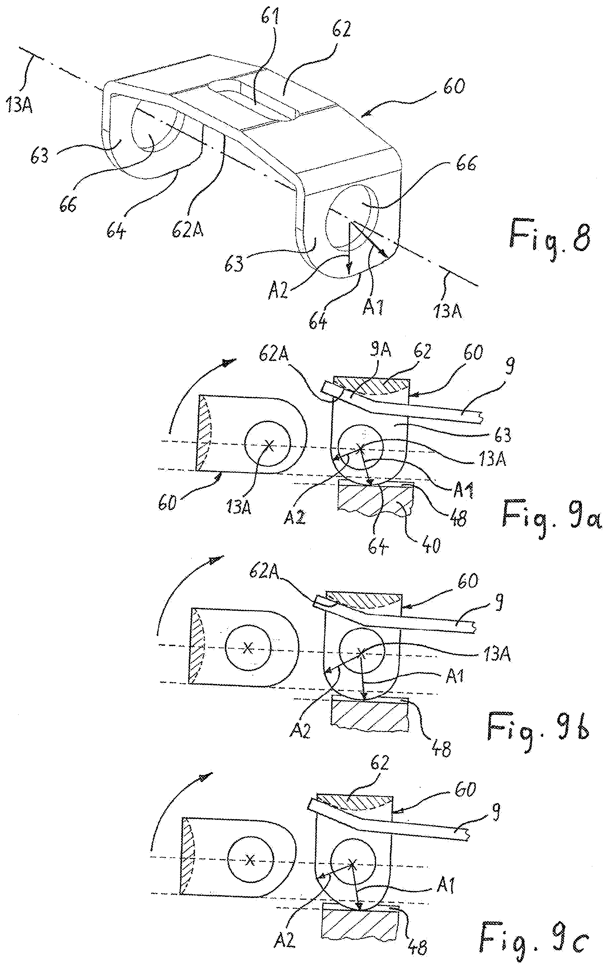

Der in Fig. 8 als Einzelteil dargestellte Bügel 60 ist das fahrzeugäußere Widerlagerelement für die Blattfeder 9. Der Bügel 60 setzt sich aus einem zu der Achse 13A parallelen Mittelabschnitt 62, auf dem sich die Öffnung 61 befinden kann, und zwei in Bezug auf den Mittelabschnitt 62 ungefähr rechtwinklig angeordneten Seitenabschnitten 63 zusammen. Diese Seitenabschnitte sind als Laschen 63 gestaltet und jeweils mit einer auf der Achse 13A angeordneten runden Öffnung 66 versehen. Indem die beiden Öffnungen 66 auf der Achse 13A zueinander fluchten, ist die Achse 13A zugleich die Fluchtungsachse der zwei Öffnungen 66. Durch beide Öffnungen zugleich tritt der Bolzen 13 hindurch. Der der Scheibenbremsdrehachse A zugewandte Rand der Laschen 63 weist eine Randkontur 64 auf, die zu der Achse 13A hin gekrümmt ist. Der der Scheibenbremsachse A zugewandte Konturabschnitt der Kontur 64 bildet einen Anschlag, da der Konturverlauf dergestalt ist, dass die Kontur 64 teils einen größeren Abstand A1 , teils einen geringeren Abstand A2 zu der Achse 13A aufweist. Zum Beispiel kann die Kontur 64 exzenterförmig sein oder sie kann kreisbogenförmig sein, dann allerdings mit Versatz zu der Achse 13A.

Der Bolzen 13 ist das Befestigungsmittel, um den als Widerlagerelement und als Sperrelement dienenden Bügel 60 lösbar an dem Bremssattel 1 zu befestigen. Zugleich liegt das Ende 9A der Blattfeder 9 unter Federspannung an der dem Bolzen 13 zugewandten Innenseite des Mittelabschnitts 62 an. Diese Innenseite ist daher das Widerlager 62A, an dem sich die Feder 9 mit ihrem Federende abstützt. Die Summe dieser Maßnahmen führt zur Sicherung und Aufrechterhaltung der Biegespannung in der Blattfeder 9.

Eine zusätzliche Sicherungsmaßnahme kann das formschlüssige Eingreifen eines an dem Federende 9A zusätzlich ausgebildeten, abgewinkelten Formschlusselements in die Öffnung 61 des Bügels 60 sein. Zu diesem Zweck kann die Feder 9 an diesem Federende nach oben gebogen sein, so dass die Außenseite dieser Biegung der Bolzenachse 13A zugewandt ist. Die Montage der Anordnung bestehend aus Belagniederhalter 7, Blattfeder 9, Bolzen 13 und Bügel 60 als Widerlagerelement und Sperrelement erfolgt, indem zunächst die Blattfeder 9 mit ihrem anderen Ende so auf den Niederhalter 7 gelegt wird, dass sie hinter das fahrzeuginnere Ende des Niederhalters 7 greift. Sodann werden die so vorläufig verbundenen Teile Niederhalter und Blattfeder in Längsrichtung in die Ausnehmung 14 in dem Bremssattel 1 hineingeschoben.

In einem nächsten Schritt wird auf das andere Federende 9A der Bügel 60 aufgesetzt, was durch das Eingreifen des Formschlusselements in die Öffnung 61 des Bügels 60 erleichtert werden kann und so für den Monteur noch sicherer wird. Das Ende 9A der Feder 9 stützt sich dabei an dem Widerlager 62A innen an dem Bügel 60 ab. Nun wird nur der Bügel 60 durch manuellen Druck und unter Biegen der Blattfeder nach unten bewegt, bis sich der Bolzen 13 längs der Achse 13A in die Lagerböcke 50 einsetzen lässt. Sodann kann die Druckausübung auf den Bügel 60 beendet werden, da nunmehr die Spannkraft der Blattfeder 9 durch den das Widerlagerelement bildenden Bügel 60 in Verbindung mit dem Bolzen 13 sicher aufgenommen wird.

Nach radial außen hin hält die Blattfeder 9 mit Federvorspannkraft den Niederhalter 7 auf den Bremsbelägen 3 und sorgt dafür, dass bei einem stärkeren Stoß, z. B. aufgrund einer Schlaglochdurchfahrt, der nach radial außen abhebende Bremsbelag 3 wieder in seine Ursprungsposition gedrückt wird. Sollte die Blattfeder 9 durch z. B. mechanische Einflüsse brechen und damit ihre Haltefunktion verlieren, ist der Niederhalter 7 durch den darüber angeordneten Bügel 60 und die Ausnehmung 14 immer noch so sicher gehalten, dass die Bremsbeläge nicht verloren werden können.

Die in Fig. 6 und Fig. 7 wiedergegebene Kröpfung 11 des auf der fahrzeugäußeren Seite der Bremsscheibe gelegenen, schmaleren Längsabschnitts des Niederhalters 7 hat den Vorteil, dass in diesem Bereich Scheibenbremsteile radial weniger weit nach außen ragen und damit ein Beitrag geleistet wird, die bauliche Enge zu dem umgebenden, um die Bremse rotierenden Fahrzeugrad zu entschärfen. Allerdings führt die Kröpfung 11 zu einem Platzbedarf im Bereich des auf der fahrzeugäußeren Seite der Bremsscheibe angeordneten Bremsbelags 3. Dieser ist daher in besonderer Weise gestaltet, was im Folgenden näher erläutert wird.

Gemäß Fig. 5 setzt sich der auf der fahrzeugäußeren Seite der Bremsscheibe angeordnete Bremsbelag 3 aus dem zur Anlage gegen die Bremsscheibe bestimmten Reibbelag 4 und der stabilen Rückenplatte 5 zusammen. Letztere besteht z. B. aus gegossenem Stahl, wobei die Vorderseite als Befestigungsfläche 16 für den Reibbelag 4 ausgebildet ist, während die Rückseite 17 als Druckfläche zur Übertragung des Bremsdrucks ausgebildet ist. Denn mit dieser Rückseite 17 liegt die Rückenplatte 5 gegen eine entsprechende, Druck ausübende Fläche 18 des Bremssattels 1 an. Die Fläche 18 ist zugleich eine Wand des Belagschachts 6. Die Umfangskontur der Rückenplatte 5 ist bestimmt durch einen oberen bzw., bezüglich der Drehachse A, äußeren Rand 21, einen der Drehachse A zugewandten inneren bzw. unteren Rand 22 und zwei sich zwischen dem oberen und dem unteren Rand erstreckende Seitenränder 23A, 23B, die parallel zueinander verlaufen.

Der obere bzw. äußere Rand 21 zeichnet sich durch einen Hauptverlauf aus, welcher die Form der Bremsscheibe aufgreift. Hierzu zeigt der obere Rand 21 hauptsächlich, d. h. auf seiner überwiegenden Länge, einen kreisbogenförmigen Verlauf, der die Kreisform am Umfang der runden Bremsscheibe übernimmt. Dies hat den Vorteil, dass der Bremsbelag 3 nicht über den technisch erforderlichen Umfang der Bremsscheibe radial nach außen vorsteht.

Mit den zwei Seitenrändern 23A, 23B ist die Rückenplatte 5 in Umfangsrichtung abgestützt, so dass die Bremsmomente auf den Bremssattel 1 oder alternativ auf einen achsfest montierten Bremsträger der Scheibenbremse übertragen werden. Zu einem geringeren Anteil kann die Übertragung der Bremsmomente auch über den unteren Rand 22 der Rückenplatte 5 erfolgen. Auch der Reibbelag 4 zeichnet sich an seinem oberen bzw. äußeren Rand 31 durch einen Hauptverlauf aus, welcher die Form der Bremsscheibe aufgreift. Hierzu zeigt der obere Rand 31 hauptsächlich, d. h. auf seiner überwiegenden Länge, einen kreisbogenförmigen Verlauf, der die Kreisform am Umfang der runden Bremsscheibe übernimmt, wodurch auch dieser Rand nicht über den Umfang der Bremsscheibe nach radial außen vorsteht, zugleich aber ein Maximum an Kontaktfläche zwischen Reibbelag 4 und Bremsscheibe zur Verfügung steht.

Wenn die Ränder 21, 31 einen grundsätzlich bogenförmigen Verlauf aufweisen, schließt dies einzelne Abweichungen von dieser Hauptgestaltung ein. So kann außermittig in Reibbelag 4 und Rückenplatte 5 eine schmale Ausnehmung 33 angeordnet sein, welche der dortigen Befestigung eines elektrischen Bremsbelag-Verschleißsensors dient. Außerdem können an dem Rand 21, ohne Beeinträchtigung der bogenförmigen Hauptgestaltung des Randes, einzelne kleine Vorsprünge angeformt sein, welche zum Beispiel im Rahmen der Produktion des Bremsbelags von Vorteil sein können.

Um Platz und einen Freiraum für die Kröpfung 11 des Niederhalters 7 zu schaffen, ist der Hauptverlauf des oberen Randes 21 der Rückenplatte 5 genau in der Mitte zwischen den beiden Seitenrändern 23A, 23B durch eine partielle Absenkung 25 des Randes 21 unterbrochen. Die Absenkung 25 ist breiter als die Breite B des abgekröpften Niederhalterabschnitts. Nur im Bereich dieser Absenkung 25 ist daher, bezogen auf den Abstand zur Drehachse A, die Höhe der Rückenplatte 5 soweit radial reduziert, dass sich in der Rückenplatte 5 ein Freiraum ergibt, durch den sich der Niederhalter 7 mit zumindest einem Teil seines Querschnitts erstreckt. Ebenfalls um Platz für den Niederhalter 7 zu schaffen, weist in demselben Bereich auch der Reibbelag 4 einen Freiraum auf. Denn während der Reibbelag 4 an seinem Außenrand 31 ansonsten hauptsächlich bogenförmig verläuft, ist auch diese primäre Gestaltung in der Mitte zwischen den beiden Seitenrändern 23A, 23B durch eine Absenkung 35 des oberen Randes 31 unterbrochen. Die Absenkung 35 führt auch an der Umfangskontur des Reibbelags 4 zu einem Freiraum, durch den sich der Niederhalter 7 mit zumindest einem Teil seines Querschnitts erstreckt. Hierzu ist die Absenkung 35 breiter als die Breite B des abgekröpften Niederhalterabschnitts.

Der Boden der Absenkung 25 in der Rückenplatte 5 ist tiefer und damit näher zu der Drehachse A angeordnet, als jene Abschnitte 31 A, 31 B des oberen Randes 31 des Reibbelags 4, die sich an die in dem Reibbelag 4 ausgebildete Absenkung 35 in Umfangsrichtung unmittelbar anschließen.

Durch die Absenkung 25 wird daher ein Freiraum für das Queren des Niederhalters geschaffen. Dadurch nimmt der Niederhalter 7 auf diesem Teil seiner Länge eine Position weniger weit radial außen ein, was die durch die bauliche Enge zwischen den Bauteilen der Scheibenbremse und dem um die Bremse rotierenden Fahrzeugrad hervorgerufene Gefahr reduziert, dass es zu einem Schleifen von Bremsenteilen innen am rotierenden Fahrzeugrad kommt.

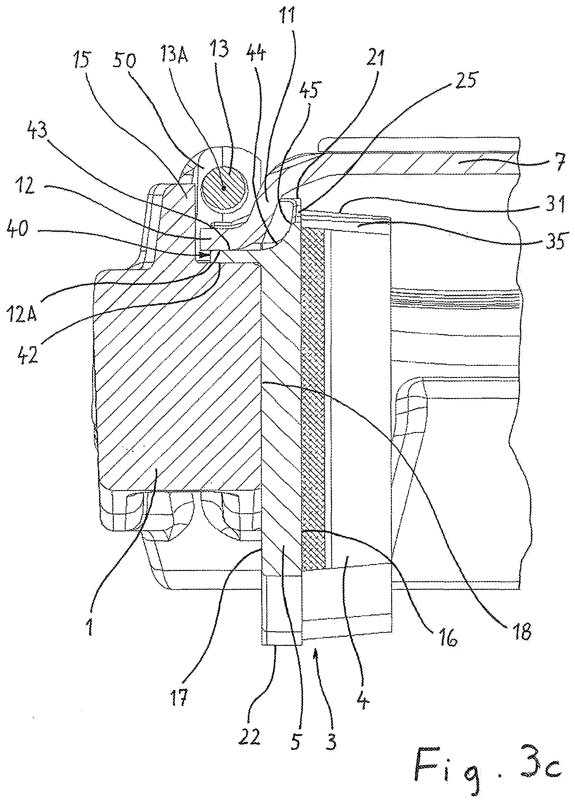

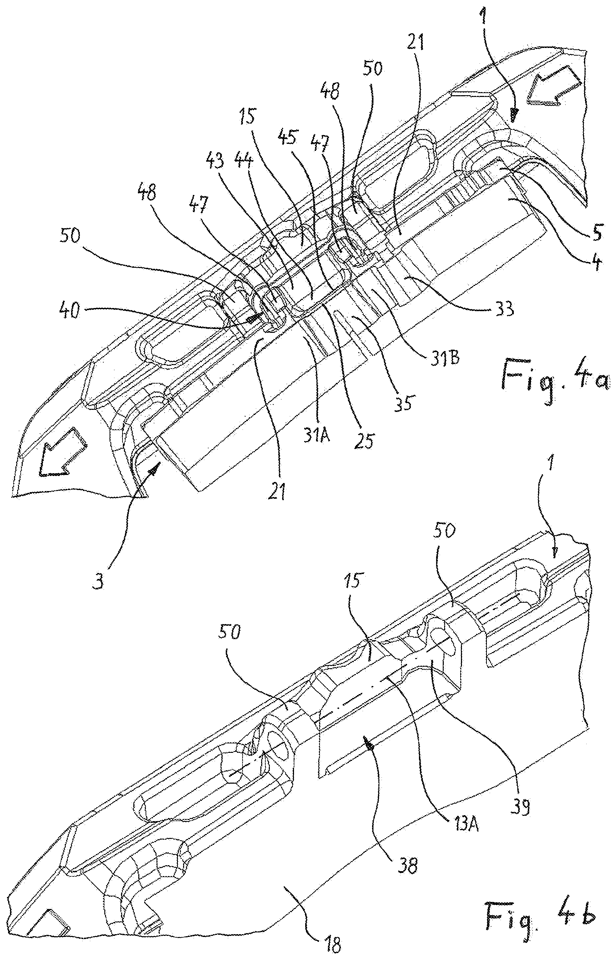

Gemäß Fig. 5 ist an der Rückseite 17 der Rückenplatte 5, unterhalb deren oberen Randes 21, einstückig ein Ansatz 40 angeformt. Der Ansatz 40 ist näher zu dem oberen Rand 21 als zu dem unteren Rand 22 der Rückenplatte 5 angeordnet. Er ist in Umfangsrichtung des Bremsbelags 3 mittig positioniert, weist also zu beiden Seitenrändern 23A, 23B denselben Abstand auf. Er ist zwecks seiner Abstützung auf einer korrespondierend gestalteten Fläche des Bremssattels 1 mit mindestens einer nach unten gerichteten Stützfläche 42 (Fig. 3c) versehen. Diese steht rechtwinklig zu der Rückseite 17 der Rückenplatte 5 und stützt sich am Boden einer Ausnehmung 38 (Fig. 4b) ab, mit der der Bremssattels 1 versehen ist.

In einer Draufsicht von oben ist der Ansatz 40 von viereckigem Grundriss. Die beiden von der Rückseite 17 beabstandeten Außenecken 41 des Ansatzes 40 sind jeweils gerundet, mit einem Eckenradius R von jeweils mindestens 4 mm. Die Rundung der Ecken 41 hat fertigungstechnische Vorteile in Bezug auf die spannende Bearbeitung der korrespondierenden Ausnehmung 38 in dem Bremssattel 1 (Fig. 4b). Diese Ausnehmung 38 dient als Belagaufnahme, indem sie den Ansatz 40 des Bremsbelags zumindest zu einem Teil aufnimmt, und sie ist dafür mit korrespondierend gerundeten Innenecken 39 von mindestens 4 mm Eckenradius versehen.

Der Stützfläche 42 abgewandt ist an dem Ansatz 40 eine flache Niederhaltefläche 43 mit einer Breite von 10 bis 20 mm und einer Länge bzw. Tiefe von mindestens 7 mm ausgebildet. Die Niederhaltefläche 43 ist tiefer und damit näher an der Drehachse A angeordnet, als die Absenkung 25. Ausschließlich auf der Niederhaltefläche 43 stützt sich der Niederhalter 7 gegen den Bremsbelag ab, nämlich mit der eine Auflagefläche 12A bildenden Unterseite des auf die Kröpfung 11 folgenden, kurzen Längsabschnitts 12.

Der Längsabschnitt 12 ist zugleich der Endabschnitt des Niederhalters. Seine Stirnfläche steht einer Querwand jener Ausnehmung 38 des Bremssattels 1 gegenüber, die den Ansatz 40 zumindest teilweise aufnimmt.

An die Niederhaltefläche 43 für die Anlage des Niederhalters 7 schließt sich zu dem Reibbelag 4 hin eine im Vergleich kürzere Übergangsfläche 44 an. Die Übergangsfläche 44 steigt bis zu dem Boden der Absenkung 25 an, zum Beispiel in Gestalt einer Biegung oder alternativ einer schrägen Rampe. Die Übergangsfläche 44 trifft an einer Kante 45 auf den Boden der Absenkung 25, wobei gemäß Fig. 3c diese Kante 45 in einer Ebene der Rückenplatte 5 angeordnet ist, die sich zwischen der Ebene der Befestigungsfläche 16 und der Ebene der Rückseite 17 befindet.

An die Niederhaltefläche 43 schließt sich seitlich, also in Umfangsrichtung des Bremsbelags betrachtet, jeweils ein Randbereich 47 an, der die Niederhaltefläche 43 überragt. Der auf der Niederhaltefläche 43 abgestützte Endabschnitt 12 des Niederhalters 7 wird daher von den zwei erhöhten Randbereichen 47 flankiert, wodurch der Niederhalter 7 kein oder wenig seitliches Spiel in Bezug auf den Bremsbelag 3 hat. Bei montiertem Bügel 60 ist dieser nicht nur ein Widerlagerelement für die Blattfeder 9, sondern er ist zugleich auch ein Sperrelement. Denn die Randkonturen 64 der Laschen 63 bilden einen Anschlag, der nicht oder nur wenig zu gegenüberliegend am Ansatz 40 ausgebildeten Flächen beabstandet ist. Dies hat zur Folge, dass kein bzw. nur ein geringes Abheben des Bremsbelages 3 mit seiner Stützfläche 42 von dem Bremssattel möglich ist. Die genannte Sperrwirkung wird erreicht, indem in jedem der beiden Randbereiche 47 des Ansatzes 40 eine Rinne 48 ausgebildet ist, die den Gegenanschlag bildet.

In Umfangsrichtung des Bremsbelags 3 betrachtet, sind die Rinnen 48 vor bzw. hinter der Mitte der Rückenplatte 5 angeordnet, wobei ihr Abstand zu dieser Mitte derselbe ist. Jede Rinne 48 erstreckt sich längs der jeweiligen Seitenfläche 49 des Ansatzes 40. Der Boden jeder Rinne 48 ist dem Bolzen 13 zugewandt und liegt der jeweiligen Kontur 64 des Bügels 60 entweder mit geringem Abstand gegenüber, oder es besteht sogar ein dauernder Kontakt zwischen der Kontur 64 und dem Boden der Rinne 48. Falls kein dauernder Kontakt besteht, ist aber jedenfalls der Abstand gering und vor allem geringer als der Abstand des Bolzens 13 zu der Kröpfung 11 bzw. zu dem Endabschnitt 12 des Niederhalters 7.

Die Konturen 64 an dem als Sperrelement dienenden Bügel 60 bilden daher jeweils einen Anschlag, und die Rinnen 48 am Bremsbelag 3 bilden jeweils den Gegenanschlag. Sollte daher der Bremsbelag 3 aufgrund starker Erschütterungen nach oben schlagen, was zu einem gleich großen Anheben auch des Niederhalters 7 führt, ist diese Bewegung spätestens dann gesperrt, wenn die Rinne 48 gegen die Kontur 64 stößt. Eine noch größere Bewegung, welche dann ganz von der Blattfeder 9 aufgenommen werden müsste, wird verhindert und so die Lebensdauer der Blattfeder 9 verlängert. Die Rinnen 48 können längs ihrer einen Seite, nämlich zu der jeweiligen Seitenfläche 49 des Ansatzes 40 hin, offen gestaltet sein. Die Rinnen 48 können an ihrem der Rückenplatte 5 abgewandten Ende offen sein. Der Rückenplatte 5 zugewandt sind sie von solcher Länge, dass sie sich nicht nur über die Tiefe des Ansatzes 40 erstrecken, sondern bis in die Dicke der Rückenplatte 5 hinein. Dadurch ist es möglich, dass der durch die Kontur 64 der Seitenabschnitte 63 gebildete Anschlag nahe der Rückenplatte 5 liegt. Dadurch wird ein Kippmoment im Falle eines Anschlagens am Bremsbelag 3 minimiert oder gar vermieden. In den Figuren 9a - 9c sind verschiedene Möglichkeiten der Gestaltung der Konturen 64 des Bügels 60 wiedergegeben. Gemeinsam ist diesen Ausgestaltungen, dass die dem Mittelabschnitt 62 des Bügels 60 abgewandten Ränder der Laschen 63 jeweils eine gekrümmte Kontur 64 aufweisen, deren Abstand A1, A2 zu der Achse 13 des Bolzens sich längs der Kontur 64 ändert. Dabei hat jener Abschnitt der gekrümmten Kontur 64 den größten Abstand A1 zu der Bolzenachse, der auch den größten Abstand zu dem Mittelabschnitt 62 aufweist.

Bei Fig. 9a und Fig. 9b ist die Kontur 64 halbrund gekrümmt, wobei der Radienmittelpunkt der Krümmung versetzt zu der Bolzenachse 13A liegt.

Bei Fig. 9c ist die Kontur 64 wie ein Nocken oder ein Exzenter gestaltet. Auch hier liegt jener Abschnitt der Kontur 64, welcher den größten Abstand A1 zu der Bolzenachse 13A hat, dem Gegenanschlag 48 gegenüber.

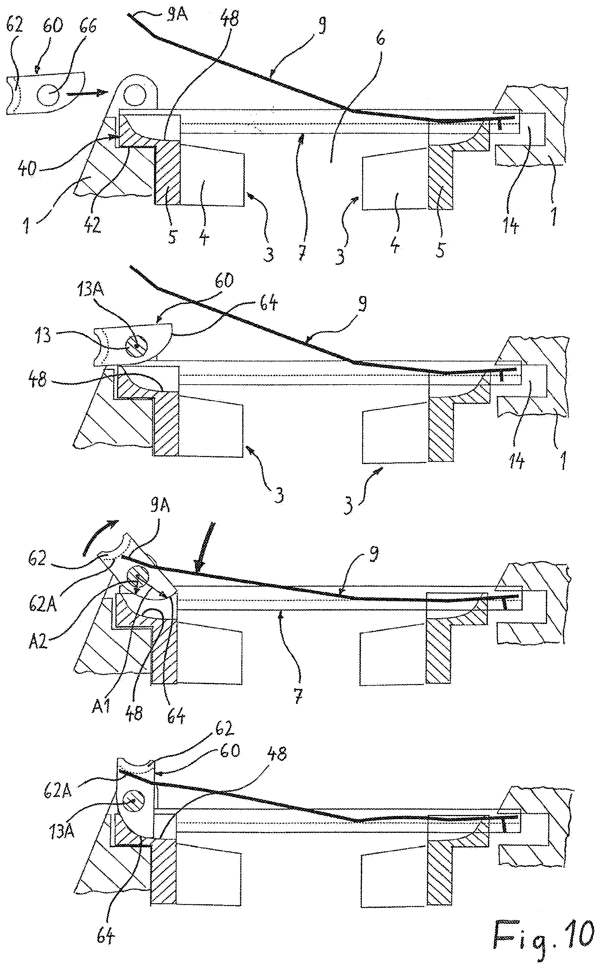

In Fig. 10 ist eine weitere Ausführungsform des Bügels 60 wiedergegeben, hier in einzelnen Montageschritten. Die an dem Bügel 60 ausgebildeten Ränder 64 sind wiederum ausgeprägt nocken- oder exzenterförmig gestaltet. Die Festlegung des fahrzeugäußeren Endes 9A der Feder 9 erfolgt, indem der bereits auf dem Bolzen 13 montierte Bügel 60 gemäß dem Schwenkpfeil um ca. 90° um die Bolzenachse 13A verschwenkt wird. Dadurch gelangt das Ende 9A der Feder unter das Widerlager 62A am Mittelabschnitt 62 des Bügels befindet. Der Bügel 60 bildet hier ein Sperrelement, welches durch die sich abstützende Feder 9 federbelastet in seiner Sperrstellung gehalten wird, die in Fig. 10 unten wiedergegeben ist. Zudem ist der Bügel 60 durch die an seinem Mittelabschnitt 62 abgestützte Feder 9 mit einer Schwenkkraft beaufschlagt, welche bestrebt ist, den an dem Bügel ausgebildeten Anschlag 64 zu dem an dem Bremsbelag ausgebildeten Gegenanschlag 48 hin zu bewegen. Erreicht wird dies, indem die dem Bolzen 13 zugewandte Innenseite des Mittelabschnitts 62, an der sich das Widerlager 62A befindet, gebogen ist. Dies führt zu einer Kraftkomponente welche bestrebt ist, einerseits den Bügel 60 stets gegen ein Rückschwenken zu sichern, und andererseits den daran ausgebildeten Anschlag 64 stets zu dem Gegenanschlag 48 hin zu bewegen. Der Anschlag 64 liegt an dem Gegenanschlag 48 unter Federkraft an, so dass der Bremsbelag 3 mit einer in radialer und / oder in von der Bremsscheibe axial weg weisender Richtung wirkenden Kraft gegen den Bremssattel 1 anliegt.

Auch die Figuren 9a - 9c zeigen eine vergleichbare Gestaltung des Mittelabschnitts 62 des Bügels 60, bei der das Widerlager 62A einen gebogenen Verlauf zeigt, so dass ein Zurückschwenken des Bügels 60 entgegen dem Schwenkpfeil praktisch ausgeschlossen ist. Einer zusätzlichen, formschlüssigen Sicherung des Federendes gegen den Bügel 60 bedarf es in diesem Fall nicht. Auch fahrzeuginnenseitig ist der Niederhalter 7 nur gering gegenüber der Blattfeder 9 beabstandet, welche sich in der schlitzförmigen Ausnehmung 14 an dem Bremssattel abstützt. Somit kann auch der innere der beiden Bremsbeläge durch die Wirkung des Niederhalters 7 nur geringfügig von seiner radialen Stützfläche abheben. Insgesamt wird erreicht, dass die beiden Beläge 3 mittels Federkraft radial zu der Scheibenbremsachse A gehalten sind, und dass im Falle des Abhebens eines oder beider Bremsbeläge 3 der diesbezügliche Weg durch Anschläge und Gegenanschläge eng begrenzt ist. Gemäß Fig. 6 und Fig. 7 ist der Niederhalter 7 an seinem anderen, fahrzeuginnen gelegenen Ende, mit dem er sich von oben her auf der Rückenplatte des innenliegenden Bremsbelags abstützt, in der Weise gestaltet, dass sich eine Abstützung dieses Niederhalterendes gegen den Bremssattel 1 in Umfangsrichtung ergibt. Hierzu ist der Niederhalter 7 an diesem Ende mit einem auf seiner Längsmittellinie M sich erstreckenden und die Basis 7C fortsetzenden Mittelabschnitt 70, sowie mit jeweils einem Seitenabschnitt 71 bzw. 72 zu jeder Seite des Mittelabschnitts 70 versehen. Die Seitenabschnitte 71, 72 befinden sich in Verlängerung der Seitenflanken 8A, 8B des als Rinne gestalteten Niederhalterabschnitts und weisen, in Längsrichtung des Niederhalters betrachtet, zu ihren Enden hin einen nach oben gebogenen, hakenförmigen Verlauf auf. Dadurch kommt es an jedem Seitenabschnitt 71, 72 zur Bildung einer oberhalb der Ebene der Basis 7C angeordneten Innenfläche 77.

Zwecks Abstützung gegen am Bremssattel 1 ausgebildete Gegenflächen 81 sind die beiden Innenflächen 77 so einander zugewandt, dass sich zwischen ihnen ein Freiraum befindet. Die Abstützung an den Gegenflächen 81 kann spielfrei erfolgen, oder mit einem in Umfangsrichtung der Bremsscheibe begrenzten Seitenspiel.

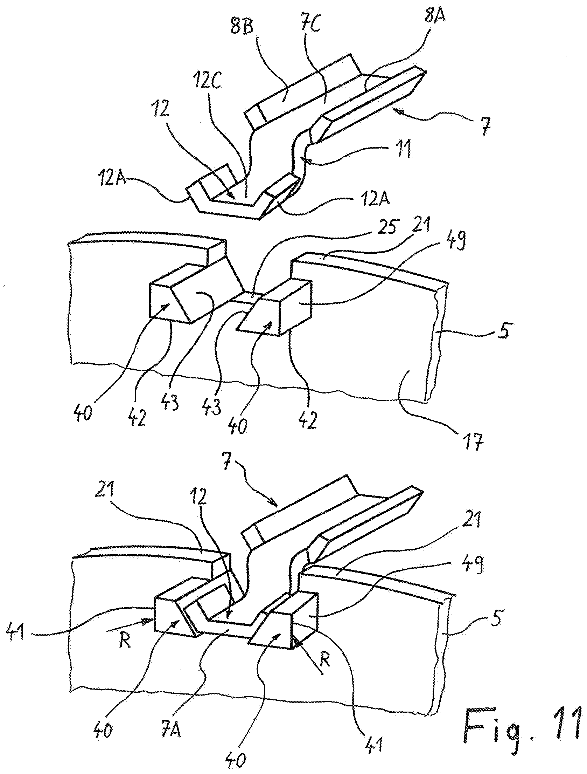

Um die gebogenen Seitenabschnitte 71, 72 durch Umformen der Stahlblechplatte, aus der der Niederhalter 7 besteht, herzustellen, sind die Seitenabschnitte 71, 72 jeweils durch einen Längsschlitz 73, 74, welcher nur zu dem nächstliegenden Ende des Niederhalters offen ist, von dem Mittelabschnitt 70 getrennt. Nur der Mittelabschnitt 70 ragt in den Schlitz 14, hingegen befinden sich die Seitenabschnitte 71, 72 außerhalb des Schlitzes. Zur Abstützung der Innenflächen 77 in Umfangsrichtung der Bremsbeläge sind an dem Bremssattel 1 oberhalb oder alternativ unterhalb des Schlitzes 14 die entsprechenden, einander abgewandten Gegenflächen 81 ausgebildet (Fig. 2). Die Fig. 11 zeigt eine abweichende Gestaltung einerseits des Niederhalters 7, andererseits des an der Rückenplatte 5 des Bremsbelags angeformten Ansatzes. Dieser ist hier zweiteilig ausgebildet, wobei zwischen den beiden Teilansätzen 40 ein Freiraum existiert. Beide Ansätze bzw. Teilansätze 40 sind jeweils mit einer zu ihrer unterseitigen Stützfläche 42 schräg angewinkelten Niederhaltefläche 43 versehen, wobei die beiden Niederhalteflächen 43 gemeinsam ein "V" bilden. Der Winkel der Niederhalteflächen 43 zu der jeweiligen Stützfläche 42 beträgt zwischen 30° und 60°.

Auch in dieser zweiteiligen Ausführungsform des Ansatzes 40 ist dieser unterhalb des oberen Randes 21 der Rückenplatte 5 an der Rückenplatte angeformt.

In Draufsicht beschreiben die beiden Ansätze 40 gemeinsam einen im Wesentlichen viereckigen Grundriss, wobei die beiden zu der Rückseite 17 der Rückenplatte 5 beabstandeten Außenecken 41 dieses Grundrisses gerundet sind mit Eckenradien R von mindestens 4 mm. Auf diese Weise passen auch diese Ansätze 40 in die in Fig. 4b wiedergegebene Ausnehmung 38 des Bremssattels 1.

Zwecks Anpassung an die beiden Ansätze 40 setzt sich der abgesenkte Endabschnitt 12 des Niederhalters 7 zusammen aus einer an die Kröpfung 11 sich anschließenden Basis 12C und zu beiden Seiten der Basis 12C schräg ansteigenden Flanken. Die Unterseiten dieser schräg ansteigenden Flanken bilden jeweils eine Auflagefläche 12A, mit der sich der Niederhalter 7 auf dem Bremsbelag abstützt. Dies sind wiederum die einzigen Orte der Abstützung des Niederhalters 7 auf dem Bremsbelag 3.

### Bezugszeichenliste

1 Bremssattel
3 Bremsbelag
4 Reibbelag
5 Rückenplatte
6 Belagschacht
7 Niederhalter
7A stirnseitiges Ende
7B Ausnehmung
7C Basis
8A Seitenflanke
8B Seitenflanke
9 Feder, Blattfeder
9A Ende der Blattfeder
9C Knick
10 Öffnung
11 Kröpfung
11A Biegung
11B Biegung
11C gerade verlaufender Abschnitt
11D Versteifungssicke
12 Längsabschnitt, Endabschnitt des Niederhalters
12A Auflagefläche
12C Basis
13 Bolzen
13A Achse, Fluchtungsachse
14 Schlitz, Ausnehmung
15 Vorsprung
16 Befestigungsfläche
17 Rückseite
18 Fläche
21 oberer Rand
22 unterer Rand
23A Seitenrand 23B Seitenrand
25 Absenkung in der Rückenplatte
31 oberer Rand
31A Abschnitt
31 B Abschnitt
33 Ausnehmung
35 Absenkung im Reibbelag
38 Ausnehmung im Bremssattel
39 Innenecke
40 Ansatz
41 Ecke
42 Stützfläche
43 Niederhaltefläche
44 Übergangsfläche
45 Kante
47 Randbereich
48 Rinne
49 Seite
50 Lagerbock
60 Bügel, Widerlagerelement, Sperrelement
61 Öffnung
62 Mittelabschnitt
62A Widerlager
63 Seitenabschnitt, Lasche
64 Kontur, Anschlag
66 Öffnung
70 Mittelabschnitt
71 Seitenabschnitt
72 Seitenabschnitt
73 Längsschlitz
74 Längsschlitz
77 Innenfläche
81 Gegenfläche am Bremssattel A Drehachse der Bremsscheibe
A1 Abstand
A2 Abstand Breite
L Länge des Endabschnitts
M Längsmittellinie
R Eckenradius

**Patentansprüche**

## Patentansprüche

1. Scheibenbremse mit einem Bremssattel (1), der eine Bremsscheibe und zu deren beiden Seiten in einem Belagschacht (6) angeordnete Bremsbeläge (3) übergreift,
die sich jeweils aus einem Reibbelag (4) und einer Rückenplatte (5) zusammensetzen, deren Vorderseite als Befestigungsfläche (16) für den Reibbelag (4) ausgebildet ist und deren Rückseite als Druckfläche zur Übertragung des Bremsdrucks ausgebildet ist, und
mit einem quer über die Bremsbeläge (3) führenden Niederhalter (7), der zu der Scheibenbremsachse (A) hin gegen die Bremsbeläge (3) abgestützt ist,
wobei der Niederhalter (7) auf einem großen Teil seiner Gesamtlänge als eine Rinne aus einer langgestreckten Basis (7C), gegen die eine Feder (9) abgestützt ist, und an den Seiten der Basis (7C) angeordneten Seitenflanken (8A, 8B) ausgebildet ist,
wobei der Niederhalter (7) zu seinem einen Ende hin eine sich an die Basis (7C) anschließende S-förmige Kröpfung (11) und einen sich an die Kröpfung (11) anschließenden Endabschnitt (12) aufweist,
**dadurch gekennzeichnet,**
**dass** an dem Endabschnitt (12) eine ein- oder zweiteilige Auflagefläche (12A) ausgebildet ist, mit der sich der Niederhalter (7) gegen einen der Bremsbeläge (3) auf der Rückseite von dessen Rückenplatte (5) abstützt.

2. Scheibenbremse nach Ansprüche 1, **gekennzeichnet durch** einen an der Rückseite der Rückenplatte (5) angeformten, ein- oder zweiteiligen Ansatz (40), auf dem der Niederhalter (7) mit der Auflagefläche (12A) abgestützt ist.

3. Scheibenbremse nach Anspruch 2, **dadurch gekennzeichnet, dass** der Ansatz (40) unterhalb des oberen Randes (21) der Rückenplatte (5) an der Rückenplatte angeformt ist.

4. Scheibenbremse nach Anspruch 2 oder 3, **dadurch gekennzeichnet, dass** der Bremssattel (1) zur Aufnahme des Ansatzes (40) mit einer Ausnehmung (38) bestehend aus einer Abstützfläche für den Ansatz (40), einer Rückwand und zwei sich gegenüberliegenden Seitenwänden versehen ist.

5. Scheibenbremse nach Anspruch 4, **dadurch gekennzeichnet, dass** die Rückwand der Ausnehmung (38) dem stirnseitigen Ende (7A) des Niederhalters (7) gegenüberliegt.

6. Scheibenbremse nach Anspruch 4 oder 5, **dadurch gekennzeichnet, dass** die Innenecken der Ausnehmung (38) im Übergang zwischen der Rückwand und der jeweiligen Seitenwand gerundet sind mit Eckenradien (R) von mindestens 4 mm

7. Scheibenbremse nach einem der Ansprüche 2 - 6, **dadurch gekennzeichnet, dass** der Ansatz (40) in Draufsicht von im Wesentlichen viereckigem Grundriss ist, wobei die beiden zu der Rückseite (17) der Rückenplatte (5) beabstandeten Ecken (41) gerundet sind mit Eckenradien (R) von mindestens 4 mm.

8. Scheibenbremse nach einem der vorangegangenen Ansprüche, **dadurch gekennzeichnet, dass** der Niederhalter (7) mit seiner Kröpfung (1 1) durch einen Freiraum im oberen Rand (21) der Rückenplatte (5) hindurchführt.

9. Scheibenbremse nach Anspruch 8, **dadurch gekennzeichnet, dass** der Freiraum darin besteht, dass der vorzugsweise kreisbogenförmige Hauptverlauf des oberen Randes (21) der Rückenplatte (5) dort, wo der Niederhalter (7) über den Bremsbelag (3) führt, durch eine Absenkung (25) des oberen Randes (21) in Richtung zu der Scheibenbremsachse (A) unterbrochen ist.

10. Scheibenbremse nach einem der vorangehenden Ansprüche, **dadurch gekennzeichnet, dass** sich der Endabschnitt (12) zusammensetzt aus einer an die Kröpfung (11) sich anschließenden Basis (12C) und zu beiden Seiten der Basis (12C) schräg ansteigenden Flanken (12B), an deren Unterseiten jeweils eine Auflagefläche (12A) ausgebildet ist.

11. Scheibenbremse nach Anspruch 10, **dadurch gekennzeichnet, dass** der Niederhalter (7) nur mit den Flanken (12B) und nicht mit der Basis (12C) gegen den Bremsbelag (3) abgestützt ist.

12. Bremsbelag (3) insbesondere für eine Scheibenbremse nach einem der Ansprüche 1 bis 11,
der sich aus einem zur Anlage gegen die Bremsscheibe der Scheibenbremse bestimmten Reibbelag (4) und einer Rückenplatte (5) zusammensetzt,
deren Vorderseite als Befestigungsfläche (16) für den Reibbelag (4) ausgebildet ist,
deren Rückseite (17) als Druckfläche zur Übertragung des Bremsdrucks ausgebildet ist, und deren Umfangskontur bestimmt ist durch einen oberen Rand (21), einen unteren Rand (22) und zwei sich zwischen dem oberen und dem unteren Rand erstreckende Seitenränder (23A, 23B),
wobei an der Rückseite (17) der Rückenplatte (5) ein ein- oder zweiteiliger Ansatz (40) angeformt ist, der zwecks Abstützung in einer Belagaufnahme mit einer dem unteren Rand (22) zugewandten Stützfläche (42) versehen ist,
**dadurch gekennzeichnet,**
**dass** in Draufsicht der Ansatz (40) bzw. die zwei Ansätze (40) gemeinsam einen im Wesentlichen viereckigen Grundriss beschreibt / beschreiben,
wobei die beiden zu der Rückseite (17) der Rückenplatte (5) beabstandeten Außenecken (41) des Grundrisses gerundet sind mit Eckenradien (R) von mindestens 4 mm, und
**dass** der Hauptverlauf des oberen Randes (21) der Rückenplatte (5) in der Mitte zwischen den beiden Seitenrändern (23A, 23B) durch eine partielle Absenkung (25) des Randes (21) unterbrochen ist, so dass sich in der Rückenplatte (5) ein Freiraum ergibt, durch den sich der Niederhalter (7) im montierten Zustand mit zumindest einem Teil seines Querschnitts erstreckt, wobei, ebenfalls um Platz für den Niederhalter (7) zu schaffen, auch der Reibbelag (4) in demselben Bereich einen Freiraum aufweist.

13. Bremsbelag nach Anspruch 12, **dadurch gekennzeichnet, dass** der Ansatz (40) zweiteilig ist, wobei die beiden Teile durch einen Freiraum voneinander getrennt sind.

14. Bremsbelag nach Anspruch 13, **dadurch gekennzeichnet, dass** die zwei Ansätze (40) jeweils mit einer zu ihrer Stützfläche (42) schräg angewinkelten Niederhaltefläche (43) versehen sind, und dass die beiden Niederhalteflächen (43) gemeinsam ein "V" bilden.

15. Bremsbelag nach Anspruch 14, **dadurch gekennzeichnet, dass** der Winkel der Niederhalteflächen (43) zu der jeweiligen Stützfläche (42) zwischen 30° und 60° beträgt.

16. Bremsbelag nach Anspruch 14 oder 15, **dadurch gekennzeichnet, dass** sich die Niederhalteflächen (43) in einem rechten Winkel zu der Ebene der Rückseite (17) erstrecken.

17. Bremsbelag nach einem der Ansprüche 12 - 16, **dadurch gekennzeichnet, dass** der ein- oder zweiteilige Ansatz (40) unterhalb des oberen Randes (21) der Rückenplatte (5) an der Rückenplatte (5) angeformt ist.

18. Niederhalter für die Befestigung von Bremsbelägen, die sich jeweils aus einem Reibbelag (4) und einer Rückenplatte (5) zusammensetzen, insbesondere für eine Scheibenbremse nach einem der Ansprüche 1 bis 11
mit einer Längserstreckung und einer demgegenüber wesentlich geringeren Breite,
wobei der Niederhalter (7) auf einem großen Teil seiner Gesamtlänge als eine Rinne aus einer langgestreckten Basis (7C) und an den Seiten der Basis (7C) angeordneten Seitenflanken (8A, 8B) ausgebildet ist, und
auf einem anderen Teil seiner Gesamtlänge einen Endbereich mit abweichender Querschnittsgestalt aufweist,
wobei der Niederhalter (7) in dem Endbereich eine sich an die Basis (7C) anschließende S-förmige Kröpfung (11) und einen sich an die Kröpfung (1 1) anschließenden Endabschnitt (12) aufweist,
**dadurch gekennzeichnet,**
**dass** an dem Endabschnitt (12) eine ein- oder zweiteilige Auflagefläche (12A) ausgebildet ist, mit der sich der Niederhalter (7) im montierten Zustand gegen einen der Bremsbeläge (3) auf der Rückseite von dessen Rückenplatte (5) abstützt,
und **dass** der Bereich der Kröpfung (11) durch mindestens eine Versteifungssicke (11 D) verstärkt ist.

19. Niederhalter nach Anspruch 18, **dadurch gekennzeichnet, dass** dieser über den Endbereich eine im Wesentlichen einheitliche Breite (B) aufweist, die geringer als die Breite in dem rinnenförmigen Abschnitt ist.

20. Niederhalter nach Anspruch 19, **dadurch gekennzeichnet, dass** die Breite (B) auf dem Endbereich gleich oder geringer als die Breite der langgestreckten Basis (7C) ist.

21. Niederhalter nach einem der Ansprüche 18 - 20, **dadurch gekennzeichnet, dass** die S-förmige Kröpfung (11) eine einmalige Kröpfung ist, bestehend aus einer ersten Biegung (11 A) und einer zweiten (11 B), der ersten entgegengesetzten Biegung, wobei die zweite Biegung (11 B) zugleich die letzte Biegung ist, an die sich unmittelbar der Endabschnitt (12) anschließt.

22. Niederhalter nach Anspruch 21, **gekennzeichnet durch** einen gerade verlaufenden Abschnitt (11 C) zwischen den zwei Biegungen (11A, 11 B).

23. Niederhalter nach einem der Ansprüche 18 - 22, **dadurch gekennzeichnet, dass** sich der Endabschnitt (12) parallel versetzt zu dem rinnenförmigen Abschnitt erstreckt.

24. Niederhalter nach Anspruch 23, **dadurch gekennzeichnet, dass** sich der Endabschnitt (12) um 15 bis 20 mm versetzt zu der Basis (7C) des rinnenförmigen Abschnitts erstreckt.

25. Niederhalter nach einem der Ansprüche 18 - 24, **dadurch gekennzeichnet, dass** sich der Endabschnitt (12) zusammensetzt aus einer an die Kröpfung (11) sich anschließenden Basis (12C) und zu beiden Seiten der Basis (12C) schräg ansteigenden Flanken, an deren Unterseiten jeweils eine Auflagefläche (12A) ausgebildet ist.

## Claims

1. A disc brake with a brake caliper (1) which straddles a brake disc and, on both sides thereof, brake linings (3) which are arranged in a lining shaft (6) and are each composed of a friction lining (4) and a back plate (5), the front side of which is designed as a fastening surface (16) for the friction lining (4) and the rear side of which is designed as a pressure surface for transmitting the brake pressure, and with a holding-down device (7) which leads transversely over the brake linings (3) and is supported against the brake linings (3) towards the disc brake axis (A), wherein the holding-down device (7) is formed over a large part of its total length as a channel consisting of an elongated base (7C), against which a spring (9) is braced, and side flanks (8A, 8B) arranged on the sides of the base (7C), wherein the hold-down (7) has, towards one end thereof, an S-shaped bend (11) adjoining the base (7C) and an end section (12) adjoining the bend (11), **characterized in that** a one- or two-part bearing surface (12A) is formed on the end section (12), with which the hold-down device (7) is supported against one of the brake linings (3) on the rear side of its back plate (5).

2. The disc brake according to claim 1, **characterized by** a one-piece or two-piece projection (40) formed on the rear side of the back plate (5), against which the hold-down device (7) is supported by the bearing surface (12A).

3. The disc brake according to claim 2, **characterized in that** the projection (40) is integrally formed on the back plate below the upper edge (21) of the back plate (5).

4. The disc brake according to claim 2 or 3, **characterized in that** the brake caliper (1) is provided with a recess (38) consisting of a support surface for the projection (40), a rear wall and two opposing side walls for receiving the projection (40).

5. The disc brake according to claim 4, **characterized in that** the rear wall of the recess (38) is opposite the front end (7A) of the hold-down device (7).

6. The disc brake according to claim 4 or 5, **characterized in that** the inner corners of the recess (38) in the transition between the rear wall and the respective side wall are rounded with corner radii (R) of at least 4 mm.

7. The disc brake according to any of claims 2-6, **characterized in that** the projection (40) has of substantially quadrangular layout in plan view, wherein the two corners (41) spaced from the rear side (17) of the back plate (5) are rounded with corner radii (R) of at least 4 mm.

8. The disc brake according to any of the preceding claims,
**characterized in that** the hold-down device (7), with its bend (11), passes through a free space in the upper edge (21) of the back plate (5).

9. The disc brake according to claim 8, **characterized in that** the free space consists **in that** the preferably circular-arc-shaped main course of the upper edge (21) of the back plate (5) is interrupted where the hold-down device (7) passes over the brake lining (3) by a lowering (25) of the upper edge (21) in the direction of the disc brake axis (A).

10. The disc brake according to any of the preceding claims,
**characterized in that** the end section (12) is composed of a base (12C) adjoining the bend (11) and flanks (12B) which rise obliquely on both sides of the base (12C), on the lower sides of which a support surface (12A) is formed in each case.

11. The disc brake according to claim 10, **characterized in that** the hold-down device (7) is supported only with the flanks (12B) and not with the base (12C) against the brake lining (3).

12. A brake pad in particular for a disc brake according to any of claims 1 to 11, which is composed of a friction lining (4) which is intended to bear against the brake disc of the disc brake and a back plate (5), the front side of which is designed as a fastening surface (16) for the friction lining (4), the rear side (17) of which is designed as a pressure surface for transmitting the braking pressure, and the circumferential contour of which is determined by an upper edge (21), a lower edge (22) and two side edges (23A, 23B) extending between the upper and the lower edge, wherein
a one-part or two-part projection (40) is integrally formed on the rear side (17) of the back plate (5), said projection being provided in a lining holder with a support surface (42) facing the lower edge (22), for the purpose of preventing a crash, **characterized in that** in plan view, the projection (40) or the two projections (40) together describes/describe a substantially quadrilateral layout, wherein the two outer corners (41) of the layout spaced apart from the rear side (17) of the back plate (5) are rounded with corner radii (R) of at least 4 mm, and **in that** the main course of the upper edge (21) of the back plate (5) is interrupted in the center between the two side edges (23A, 23B) by a partial lowering (25) of the edge (21), such that a free space is provided in the back plate (5), through which the hold-down device (7), in the assembled state, extends with at least a part of its cross section, wherein, likewise in order to create space for the hold-down device (7), the friction lining (4) also has a free space in the same region.

13. The brake pad according to claim 12, **characterized in that** the projection (40) is in two parts, wherein the two parts are separated from one another by a free space.

14. The brake pad according to claim 13, **characterized in that** the two projections (40) are each provided with a hold-down surface (43) which is angled at an angle to its support surface (42), and the two hold-down surfaces (43) together form a "V".

15. The brake pad according to claim 14, **characterized in that** the angle of the hold-down surfaces (43) to the respective support surface (42) is between 30° and 60°.

16. The brake pad according to claim 14 or 15, **characterized in that** the hold-down surfaces (43) extend at a right angle to the plane of the rear side (17).

17. The brake pad according to claim 12-16, **characterized in that** the one-part or two-part projection (40) is integrally formed on the back plate (5) below the upper edge (21) of the back plate (5).

18. A hold-down device for fastening brake linings, each of which is composed of a friction lining (4) and a back plate (5), in particular for a disc brake according to any of claims 1 to 11, having a longitudinal extent and a width which is substantially smaller than the longitudinal extent, wherein the hold-down device (7) is designed, over a large part of its overall length, as a channel comprising an elongate base (7C) and side flanks (8A, 8B) arranged on the sides of the base (7C) and, on another part of its overall length has, an end region with a deviating cross-sectional shape, wherein the end region of the hold-down device (7) has an S-shaped bend (11) adjoining the base (7C) and an end section (12) adjoining the bend (11), **characterized in that** a one- or two-part bearing surface (12A) is formed on the end section (12), with which surface the hold-down device (7) is supported in the assembled state against one of the brake linings (3) on the rear side of its back plate (5), and **in that** the region of the bend (11) is reinforced by at least one stiffening bead (11 D).

19. The hold-down device according to claim 18, **characterized in that** this has a substantially uniform width (B) over the end region, which is smaller than the width in the channel-shaped section.

20. The hold-down device according to claim 19, **characterized in that** the width (B) on the end region is equal to or less than the width of the elongate base (7C).

21. The hold-down device according to any of claims 18-20, **characterized in that** the S-shaped bend (11) is a unique bend consisting of a first bend (11 A) and a second bend (11 B), opposite to the first one, wherein the second bend (11 B) is at the same time the last bend immediately followed by the end section (12).

22. The hold-down device according to claim 21, **characterized by** a straight section (11 C) between the two bends (11A, 11 B).

23. The hold-down device according to any of claims 18-22, **characterized in that** the end section (12) extends offset in parallel to the channel-shaped section.

24. The hold-down device according to claim 23, **characterized in that** the end section (12) extends from 15 to 20 mm offset from the base (7C) of the channel-shaped section.

25. The hold-down device according to any of claims 18-24, **characterized in that** the end section (12) is composed of a base (12C) adjoining the bend (11) and flanks rising obliquely on both sides of the base (12C), on the lower sides of which a support surface (12A) is formed in each case.

## Revendications

1. Frein à disque avec un étrier de frein (1), qui enserre par le dessus un disque de frein et des garnitures de frein (3) disposées des deux côtés de celui-ci dans une cavité de garniture (6), qui se composent respectivement d'une garniture de friction (4) et d'un porte-garniture (5), dont la face avant est réalisée sous la forme d'une surface de fixation (16) pour la garniture de friction (4) et dont la face arrière est réalisée sous la forme d'une surface de pression pour la transmission de la pression de freinage, et avec un élément de retenue (7) menant transversalement sur toute l'étendue des garnitures de frein (3), qui est en appui en direction de l'axe de frein de disque (A) contre les garnitures de frein (3), dans lequel l'élément de retenue (7) est réalisé sur une grande partie de sa longueur totale sous la forme d'une rainure composée d'une base de forme allongée (7C), contre laquelle un ressort (9) est en appui, et de flancs latéraux (8A, 8B) disposés sur les faces de la base (7C), dans lequel l'élément de retenue (7) présente en direction d'une de ses extrémités un coude (11) en forme de S se raccordant à la base (7C) et une section d'extrémité (12) se raccordant au coude (11), **caractérisé en ce qu'**une surface de support (12A) en une ou deux parties, avec laquelle l'élément de retenue (7) s'appuie contre une des garnitures de frein (3) sur la face arrière du porte-garniture (5) de celui-ci, est réalisée sur la section d'extrémité (12).

2. Frein à disque selon la revendication 1, **caractérisé par** une partie saillante (40) en une ou deux parties, formée sur la face arrière du porte-garniture (5), sur laquelle l'élément de retenue (7) est en appui avec la surface de support (12A).

3. Frein à disque selon la revendication 2, **caractérisé en ce que** la partie saillante (40) est formée sur le porte-garniture au-dessous du bord supérieur (21) du porte-garniture (5).

4. Frein à disque selon la revendication 2 ou 3, **caractérisé en ce que** l'étrier de frein (1) pour la réception de la partie saillante (40) est pourvu d'un évidement (38) constitué d'une surface d'appui pour la partie saillante (40), d'une paroi arrière et de deux parois latérales opposées.

5. Frein à disque selon la revendication 4, **caractérisé en ce que** la paroi arrière de l'évidement (38) est opposée à l'extrémité frontale (7A) de l'élément de retenue (7).

6. Frein à disque selon la revendication 4 ou 5, **caractérisé en ce que** les coins intérieurs de l'évidement (38) dans la transition entre la paroi arrière et la paroi latérale respective sont arrondis avec des rayons de coin (R) d'au moins 4 mm.

7. Frein à disque selon l'une quelconque des revendications 2 - 6, **caractérisé en ce que** la partie saillante (40) en vue en élévation présente une projection horizontale sensiblement carrée , dans lequel les deux coins (41) espacés de la face arrière (17) du porte-garniture (5) sont arrondis avec des rayons de coin (R) d'au moins 4 mm.

8. Frein à disque selon l'une quelconque des revendications précédentes, **caractérisé en ce que** l'élément de retenue (7) avec son coude (11) passe à travers un espace libre dans le bord supérieur (21) du porte-garniture (5).

9. Frein à disque selon la revendication 8, **caractérisé en ce que** l'espace libre réside dans le fait que le tracé principal de préférence en forme d'arc de cercle du bord supérieur (21) du porte-garniture (5) à l'endroit où l'élément de retenue (7) mène sur toute l'étendue de la garniture de frein (3), est interrompu par un abaissement (25) du bord supérieur (21) en direction de l'axe de frein de disque (A).

10. Frein à disque selon l'une quelconque des revendications précédentes, **caractérisé en ce que** la section d'extrémité (12) se compose d'une base (12C) se raccordant au coude (11) et de flancs (12B) s'élevant de manière inclinée vers les deux faces de la base (12C), sur les faces inférieures desquels est réalisée respectivement une surface de support (12A).

11. Frein à disque selon la revendication 10, **caractérisé en ce que** l'élément de retenue (7) est en appui contre la garniture de frein (3) uniquement avec les flancs (12B) et non avec la base (12C).

12. Garniture de frein en particulier pour un frein à disque selon l'une quelconque des revendications 1 à 11, qui se compose d'une garniture de friction (4) destinée à venir en contact contre le disque de frein du frein à disque et d'un porte-garniture (5), dont la face avant est réalisée sous la forme d'une surface de fixation (16) pour la garniture de friction (4), dont la face arrière (17) est réalisé sous la forme d'une surface de pression pour la transmission de la pression de freinage, et dont le contour périphérique est déterminé par un bord supérieur (21), un bord inférieur (22) et deux bords latéraux (23A, 23B) s'étendant entre le bord supérieur et le bord inférieur, dans laquelle une partie saillante (40) en une ou deux parties, qui est pourvue d'une surface d'appui (42) tournée vers le bord inférieur (22) aux fins d'appui dans un logement de garniture, est formée sur la face arrière (17) du porte-garniture (5), **caractérisée en ce qu'**en vue en élévation la partie saillante (40) ou les deux parties saillantes (40) décrit/décrivent conjointement une projection horizontale sensiblement carrée , dans laquelle les deux coins extérieurs (41) de la projection horizontale espacés de la face arrière (17) du porte-garniture (5) sont arrondis avec des rayons de coin (R) d'au moins 4 mm, et **en ce que** le tracé principal du bord supérieur (21) du porte-garniture (5) est interrompu au milieu entre les deux bords latéraux (23A, 23B) par un abaissement partiel (25) du bord (21), de sorte qu'il se forme dans le porte-garniture (5) un espace libre à travers lequel l'élément de retenue (7), à l'état monté, s'étend avec au moins une partie de sa section transversale, dans lequel, également pour créer de la place pour l'élément de retenue (7), la garniture de friction (4) présente également un espace libre dans la même zone.

13. Garniture de frein selon la revendication 12, **caractérisée en ce que** la partie saillante (40) est en deux parties, dans laquelle les deux parties sont séparées l'une de l'autre par un espace libre.

14. Garniture de frein selon la revendication 13, **caractérisée en ce que** les deux parties saillantes (40) sont pourvues respectivement d'une surface de retenue (43) inclinée par rapport à leur surface d'appui (42), et que les deux surfaces de retenue (43) forment conjointement un « V ».

15. Garniture de frein selon la revendication 14, **caractérisée en ce que** l'angle des surfaces de retenue (43) par rapport à la surface d'appui (42) respective est compris entre 30° et 60°.

16. Garniture de frein selon la revendication 14 ou 15, **caractérisée en ce que** les surfaces de retenue (43) s'étendent à angle droit par rapport au plan de la face arrière (17).

17. Garniture de frein selon l'une quelconque des revendications 12 - 16, **caractérisée en ce que** la partie saillante (40) en une ou deux parties au-dessous du bord supérieur (21) du porte-garniture (5) est formée sur le porte-garniture (5).

18. Élément de retenue pour la fixation de garnitures de frein, qui se composent respectivement d'une garniture de friction (4) et d'un porte-garniture (5), en particulier pour un frein à disque selon l'une quelconque des revendications 1 à 11 avec une étendue longitudinale et une largeur sensiblement plus petite par rapport à celle-ci, dans lequel l'élément de retenue (7) est réalisé sur une grande partie de sa longueur totale sous la forme d'une rainure composée d'une base (7C) de forme allongée et de flancs latéraux (8A, 8B) disposés sur les faces de la base (7C), et présente sur une autre partie de sa longueur totale une zone d'extrémité avec une configuration de section transversale différente, dans lequel l'élément de retenue (7) présente dans la zone d'extrémité un coude (11) en forme de S se raccordant à la base (7C) et une section d'extrémité (12) se raccordant au coude (11), **caractérisé en ce qu'**une surface de support (12A) en une ou deux parties, avec laquelle l'élément de retenue (7) s'appuie dans l'état monté contre une des garnitures de frein (3) sur la face arrière du porte-garniture (5) de celui-ci, est réalisée sur la section d'extrémité (12), et **en ce que** la zone du coude (11) est renforcée par au moins une moulure de renforcement (11D).

19. Élément de retenue selon la revendication 18, **caractérisé en ce que** celui-ci présente sur toute l'étendue de la zone d'extrémité une largeur (B) sensiblement uniforme, qui est inférieure à la largeur dans la section en forme de rainure.

20. Élément de retenue selon la revendication 19, **caractérisé en ce que** la largeur (B) sur la zone d'extrémité est inférieure ou égale à la largeur de la base de forme allongée (7C).

21. Élément de retenue selon l'une quelconque des revendications 18 - 20, **caractérisé en ce que** le coude (11) en forme de S est un coude unique, constitué d'une première courbure (11A) et d'une deuxième courbure (11B) opposée à la première courbure, dans lequel la deuxième courbure (11B) est en même temps la dernière courbure à laquelle la section d'extrémité (12) se raccorde directement.

22. Élément de retenue selon la revendication 21, **caractérisé par** une section (11C) s'étendant en ligne droite entre les deux courbures (11A, 11B).

23. Élément de retenue selon l'une quelconque des revendications 18 - 22, **caractérisé en ce que** la section d'extrémité (12) s'étend parallèlement de manière décalée de la section en forme de rainure.

24. Élément de retenue selon la revendication 23, **caractérisé en ce que** la section d'extrémité (12) s'étend de manière décalée de 15 à 20 mm de la base (7C) de la section en forme de rainure.

25. Élément de retenue selon l'une quelconque des revendications 18 - 24, **caractérisé en ce que** la section d'extrémité (12) se compose d'une base (12C) se raccordant au coude (11) et de flancs s'élevant de manière inclinée des deux côtés de la base (12C), sur les faces inférieures desquels respectivement une surface de support (12A) est réalisée.
